# EUROPÄISCHE PATENTSCHRIFT

(11) **EP 3 924 197 B1**
(45) Veröffentlichungstag und Bekanntmachung des Hinweises auf die Patenterteilung: **19.10.2022**
(21) Anmeldenummer: 20717084.6
(22) Anmeldetag: 17.03.2020
(51) Int. Cl.: B60J 7/06, B62D 35/00, B62D 35/02

(54) **PLANENAUFBAU**
TARPAULIN STRUCTURE
STRUCTURE DE BÂCHAGE

(30) Priorität: 26.03.2019 DE 202019101728 U; 28.03.2019 DE 202019101781 U
(43) Veröffentlichungstag der Anmeldung: 22.12.2021
(73) Patentinhaber: European Trailer Systems GmbH, 47441 Moers (DE)
(72) Erfinder: LEUKERS, Markus, 47546 Kalkar (DE); LUDWIG, Mathias, 47546 Kalkar (DE)
(74) Vertreter: IPrime Bonnekamp Sparing Patentanwaltsgesellschaft mbH
(86) Internationale Anmeldenummer: PCT/DE2020/100211
(87) Internationale Veröffentlichungsnummer: WO 2020/192839

(56) Entgegenhaltungen:
- WO-A1-2018/177841
- WO-A1-2018/200007
- DE-A1-102014 008 951
- US-A- 4 740 029

## Beschreibung

Die Erfindung betrifft einen Planenaufbau für einen verfahrbaren Unterbau, wie beispielsweise einen Lastkraftwagen, einen Anhänger, einen Auflieger, einen Bahnwaggon, einen Muldenkipper oder einen Container.

Aus der Praxis sind Planenaufbauten bekannt, bei denen die Plane an ein Verdeckgestell angeschlossen ist, wobei das Verdeckgestell eine Mehrzahl von Holmen ausweist, die entlang einer an dem Unterbau angeordneten Führung, die in der Regel beiderseits des Unterbaus jeweils eine Schiene umfasst, verlagerbar sind. Die Führung kann eine Schiene sein, in der endseitig an den Holmen vorgesehene Schlitten verlagerbar sind, es ist aber auch möglich, dass die Führung einen Antrieb, zum Beispiel einen umlaufenden angetriebenen Draht, der mit den Holmen verbunden ist, aufweist. Das Verdeckgestell weist endseitig ein Endlaufteil auf, das zum Öffnen des Aufbaus anhebbar und zum Schließen des Aufbaus absenkbar ist. Nachteilig bei den bekannten Planenaufbauten ist, dass beim Transport der Unterbauten im Bereich der in Fahrtrichtung hinten liegenden Endlaufteile der Fahrtwind ab Geschwindigkeiten von ca. 60 km/h - oder höher - Verwirbelungen verursacht, die dazu neigen, das Endlaufteil durch Saugwirkung anzuheben. Dies führt dazu, dass das Endlaufteil aufwendig von Hand verriegelt werden muss, was häufig vergessen wird und jedenfalls bei Schiebedächern nicht einfach zu bewerkstelligen ist. Überdies gibt es Konfigurationen, bei denen ein sicheres Anheben des Endlaufteils zweckmäßig oder erwünscht ist, beispielsweise bei einem Muldenkipper, dessen Ladegut abgeschüttet wird, da sonst das abgeschüttete Ladegut das Verdeckgestell beschädigen würde. Ferner erfordert das Verschwenken der Klappe des Muldenkippers ein Anheben des Endlaufteils, weil die beiden Teile sich sonst gegenseitig behindern.

Aus der Praxis sind Luftablenkteile bekannt, die auf der Heckpartie von Personenkraftfahrzeugen angebracht werden, um den Anpressdruck des Fahrzeugs auf seine Hinterachse bei sehr hohen Geschwindigkeiten zu erhöhen.

DE 10 2014 008 951 A1 stellt den nächstkommenden Stand der Technik dar und beschreibt einen Planenaufbau für einen verfahrbaren Unterbau, wie beispielsweise einen Lastkraftwagen, einen Anhänger, einen Auflieger, einen Bahnwaggon, einen Muldenkipper oder einen Container, umfassend ein Verdeckgestell, an dem eine Plane aus wetterbeständigem Material anschließbar ist, wobei das Verdeckgestell eine Mehrzahl von Holmen aufweist, die entlang wenigstens einer Führung verlagerbar sind, wobei das Verdeckgestell endseitig ein Endlaufteil aufweist, das zum Öffnen des Aufbaus anhebbar und zum Schließen des Aufbaus absenkbar ist.

WO 2018 177 841 A1 beschreibt einen Aufbau eines Lastkraftwagens, der zwei heckseitige Türen und eine Dachfläche aufweist, wobei im oberen Bereich jeder der beiden Türen und in Verlängerung der Dachfläche jeweils ein Luftablenkteil angeordnet ist, wobei die beiden Luftablenkteile durch eine Kopplungseinrichtung miteinander gekoppelt sind, wobei eine Verstelleinrichtung das Annehmen eines Schwenkwinkels um eine Schwenkachse ermöglicht.

DE 10 2012 023 716 A1 beschreibt einen Planenaufbau für einen verfahrbaren Lastkraftwagen, bei dem eine Abdeckung, bei dem eine Plane aus wetterbeständigem Material am ein Verdeckgestell angeschlossen ist. Das Verdeckgestell weist hierbei mehrere Holme auf, die entlang einer vertikalen Führung in der Höhe verstellbar sind, und hierdurch den Luftwiderstand zu reduzieren. Die Holme können hierbei eine luftstromlenkende Geometrie aufweisen. Nachteilig bei dem bekannten Planenaufbau ist der Umstand, dass kein sich öffnendes Verdeck vorgesehen ist, sondern die Holme in vertikalen Stützen festgelegt sind, so dass kein zum Öffnen vorgesehenes Schiebedach möglich ist, wodurch die Beladung erschwert ist.

DE 196 02 602 A1 beschreibt einen Nutzfahrzeugaufbau, bei dem die Heckpartie nach unten abgeschrägt ist, um einen günstigeren Windwiderstand aufzuweisen.

DE 10 2010 027 716 A1 beschreibt einen Aufbau für ein Lastfahrzeug, bei dem der Aufbau höhenverstellbar ausgebildet ist und wahlweise eine aerodynamisch günstige Tropfenform annehmen kann.

Es ist die Aufgabe der Erfindung, einen Planenaufbau anzugeben, dessen Endlaufteil von dem Fahrtwind nicht angehoben wird.

Diese Aufgabe wird erfindungsgemäß durch einen Planenaufbau mit den Merkmalen des unabhängigen Anspruchs 1 gelöst.

Der erfindungsgemäße Planenaufbau für einen verfahrbaren Unterbau, wie beispielsweise einen Lastwagen, einen Anhänger, einen Auflieger, einen Bahnwaggon, einen Muldenkipper oder einen Container, umfasst ein Verdeckgestell, an dem eine Plane aus wetterbeständigem Material anschließbar ist, wobei das Verdeckgestell eine Mehrzahl von Holmen ausweist, die entlang wenigstens einer Führung verlagerbar sind. Hierbei weist das Verdeckgestell endseitig ein Endlaufteil auf, das zum Öffnen des Aufbaus anhebbar und zum Schließen des Aufbaus absenkbar ist. Der Planenaufbau zeichnet sich hierbei dadurch aus, dass an einem Ende des Endlaufteils ein Luftablenkteil angeordnet ist, durch das der Fahrtwind in eine Kraft in Absenk- bzw. Schließrichtung des Endlaufteils umgewandelt wird. Hierdurch wird zuverlässig sichergestellt, dass das Endlaufteil bei Überschreiten bestimmter Geschwindigkeiten in Schließrichtung gedrückt wird, selbst wenn der Luftwiderstand des Aufbaus insgesamt dadurch geringfügig erhöht wird. Vorteilhaft ist es dann nicht mehr erforderlich, das Endlaufteil, welches auch in mehreren Metern Höhe angeordnet sein kann, manuell zu verriegeln. Die mit dem Verriegeln und dem Lösen der Verriegelung einhergehenden Probleme wie ein Verklemmen der Riegel, oder nicht-fluchtende Riegelglieder werden damit wirksam eliminiert. Ebenso ist hierdurch sichergestellt, dass das Endlaufteil beim Abkippen eines als Muldenkipper ausgebildeten Unterbaus stets auf Grund nur der Schwerkraft von dem Unterbau fortschwenkt, ohne dass der Aufbau gesondert ganz oder teilweise geöffnet werden muss.

Das Luftablenkteil ist zweckmäßigerweise an dem distalen Ende des Endlaufteils angeordnet, wo der Hebelarm zu dessen Anlenkung groß ist, so dass nur ein geringer Überstand ein großes Schließmoment erzeugt. Alternativ ist es möglich, das Luftablenkteil auch in seitlichen Bereichen des Endlaufteils anzuordnen. Es ist insbesondere möglich, mehrere Luftablenkteile an dem Endlaufteil vorzusehen, wobei die Luftablenkteile sich zweckmäßig dadurch auszeichnen, dass sie vertikal über die Plane des Planenaufbaus vorstehen, um eine vertikal nach unten gerichtete Kraft zu erreichen.

Der Überstand des Ablenkteils über den Aufbau ist zweckmäßig nicht größer als 50 mm bemessen, gemessen in der Projektion auf eine vertikale Ebene. Hierdurch ist die Verletzungsgefahr reduziert und eine einfache Nutzung des Aufbaus im Straßenverkehr gewährleistet.

Es ist nicht erforderlich, dass die Luftablenkteile selbst vertikal ausgerichtet sind. Es reicht aus, wenn eine vertikale Komponente dem Fahrtwind entgegensteht und damit einen Anpressdruck bzw. eine Anpresskraft des Endlaufteils nach unten erreicht.

Zweckmäßigerweise ist das Luftablenkteil an der Außenseite der Plane angeordnet, sodass der Fahrtwind unmittelbar an das Luftablenkteil angreift und damit das Endlaufteil nach unten drückt. Alternativ kann das Luftablenkteil auch unter der Plane angeordnet sein, wobei die Plane dann das Luftablenkteil überspannt.

Vorzugsweise ist das Luftablenkteil mit dem Endlaufteil verbunden, wobei für die Verbindung des Luftablenkteils mit dem Endlaufteil vorgesehenen Verbindungsmittel die Plane durchsetzen. Ist daher das Luftablenkteil an einem distalen Holm, wie einer Traverse des Endlaufteils, angenietet, durchsetzen die Nieten die Plane und fixieren dadurch zuverlässig die Plane an dem Endlaufteil, z.B. an der Traverse.

Eine günstige Ausgestaltung ergibt sich dann, wenn das Luftablenkteil einen Verbindungabschnitt und einen Luftleitabschnitt aufweist, wobei der Luftleitabschnitt über die Plane nach oben vorsteht. Hierdurch wird vorteilhaft erreicht, dass der Luftleitabschnitt im Fahrtwind steht und über den Verbindungsabschnitt in das Endlaufteil eine Kraft in Schließrichtung einleitet.

Zweckmäßigerweise ist der Luftleitabschnitt gegenüber dem Verbindungsabschnitt abgefaltet, wobei der Winkel der Abfaltung zweckmäßig größer 90° und kleiner 180° dimensioniert ist. Hierdurch kann beispielsweise ein Anstellwinkel des Luftleitabschnitts gegenüber der Horizontalen von circa 30° bis 70°, vorzugsweise zwischen 45° und 60 °und insbesondere von 50° erreicht werden.

In zweckmäßiger Weiterbildung ist vorgesehen, dass der Luftleitabschnitt Durchbrechung und/oder Aussparungen aufweist. Die Durchbrechungen können beispielsweise als Lochmuster ausgebildet sein, um den Anpressdruck soweit zu reduzieren, dass Luftwiderstand nicht unnötig hoch ausfällt. In einer vorteilhaften Ausgestaltung können die Durchbrechungen auch das Logo des Aufbautenherstellers beinhalten. Alternativ und/oder kumulativ können auch Aussparungen in dem Luftleitabschnitt vorgesehen sein, um den Kraftstoffverbrauch zu reduzieren. Es ist nicht erforderlich, dass der Luftleitabschnitt über die gesamte Breite des Endlaufteils an diesem angeschlossen ist. Vielmehr kann der Luftleitabschnitt auch nur einen Teil der Breite des Endlaufteils ausmachen.

Das Luftablenkteil ist zweckmäßigerweise als Stahlteil ausgebildet, das auch bei höheren Geschwindigkeiten nicht deformiert wird. Alternativ ist es möglich, das Luftablenkteil auch als Kunststoffteil auszubilden, das im Fall eines Unfalls oder eines Zusammenstoßes eine geringere Verletzungsgefahr aufweist.

Der Luftleitabschnitt steht zweckmäßigerweise nicht über die maximale Höhe des Planenaufbaus vor, wenn der Planenaufbau geschlossen ist, um zu vermeiden, dass die Gesamtbeladehöhe auf Grund zulassungsrechtlicher Vorschriften reduziert wird.

In zweckmäßiger Ausgestaltung ergibt sich, dass das Luftablenkteil bei einer Fahrtgeschwindigkeit von 50 km/h eine Anpresskraft zwischen 30 N und 300 N, vorzugsweise zwischen 50 N und 150 N und zweckmäßigerweise von nicht mehr als 100 N auf das Endlaufteil in Schließrichtung erzeugt. Durch diese vergleichsweise geringen Anpresskräfte wird bereits erreicht, dass das Endlaufteil auf Grund von Verwirbelungen nicht angehoben wird, selbst wenn es nicht an dem Unterbau und/oder dem Planenaufbau verriegelt ist.

Das Endlaufteil ist zweckmäßigerweise gelenkig an dem Verdeckgestell angeschlossen, wodurch es sich einfach auf und ab schwenken lässt.

Zweckmäßigerweise ist das Endlaufteil ohne Verriegelung ausgebildet, sodass keine Möglichkeit besteht, das Endlaufteil mit dem Unterbau oder dem Verdeckgestell zu verriegeln. Hierdurch ist vorteilhaft sichergestellt, dass der Aufbau jederzeit ohne Entriegeln geöffnet werden kann, was insbesondere im Falle eines Muldenkippers, der über eine heckseitige Klappe seine Last abkippt, zweckmäßig ist, da der Schwenkweg der Klappe mit dem von dem Endlaufteil abgedeckten Bereich kollidieren würde, wenn das Endlaufteil sich nicht unter der Schwerkraft abheben würde.

Gemäß einer günstigen Weiterbildung ist vorgesehen, dass das Verdeckgestell motorisch angetrieben ist, um den Planenaufbau zu öffnen oder zu schließen. Der motorische Antrieb erfolgt hierbei aus dem Führerhaus eines Fahrzeugs oder vom Boden und damit in einem signifikanten Abstand von der Ebene des Planenaufbaus, sodass eine manuelle Ver- oder Entriegelung bei einem motorischen Antrieb problematisch ist.

Der Planenaufbau ist zweckmäßig als Schiebedach für einen Lastkraftwagen, einen Anhänger, einen Auflieger, einen Bahnwaggon, einen Muldenkipper oder einen Container ausgebildet, wobei der Planenaufbau den Unterbau auch überbauen kann, beispielsweise wenn die Holme U-förmig ausgebildet sind. Es ist möglich, die benachbarten Holme im Bereich ihrer Anschlüsse an die Führung, insbesondere im Bereich ihrer Schlitten miteinander durch Planenfalthilfen zu verbinden, wobei die Planenfalthilfen als U-förmige Bügel oder auch als Kunststofffaltelemente, die im Bereich der Führung angeordnet sind, ausgebildet sein können.

Die Erfindung beinhaltet die überraschende Erkenntnis, dass ein Luftablenkteil, das nicht benötigt wird, um Kräfte auf die Achse des Transportfahrzeugs zu übertragen, tatsächlich eine nicht verriegelte Klappe daran hindert, unter dem Einfluss des Fahrtwinds sich abzuheben oder zu klappern.

Gemäß einem Aspekt wird die Verwendung eines Luftablenkteils angegeben, das an ein Endlaufteil eines Planenaufbaus angeschlossen ist, um dieses gegen unbeabsichtigtes Klappern oder Anheben bei einem Fahrtwind zu sichern.

Weitere Vorteile, Merkmale, Eigenschaften und Weiterbildungen der Erfindung ergeben sich aus der nachfolgenden Beschreibung eines bevorzugten Ausführungsbeispiels sowie aus den abhängigen Ansprüchen.

Die Erfindung wird nunmehr nachstehend unter Bezugnahme auf die anliegenden Zeichnungen anhand eines bevorzugten Ausführungsbeispiels näher erläutert.
- Fig. 1: zeigt eine perspektivische Ansicht eines erfindungsgemäßen Planenaufbaus von oben.
- Fig. 2: zeigt eine perspektivische Ansicht des Planenaufbaus aus Fig. 1 von hinten.

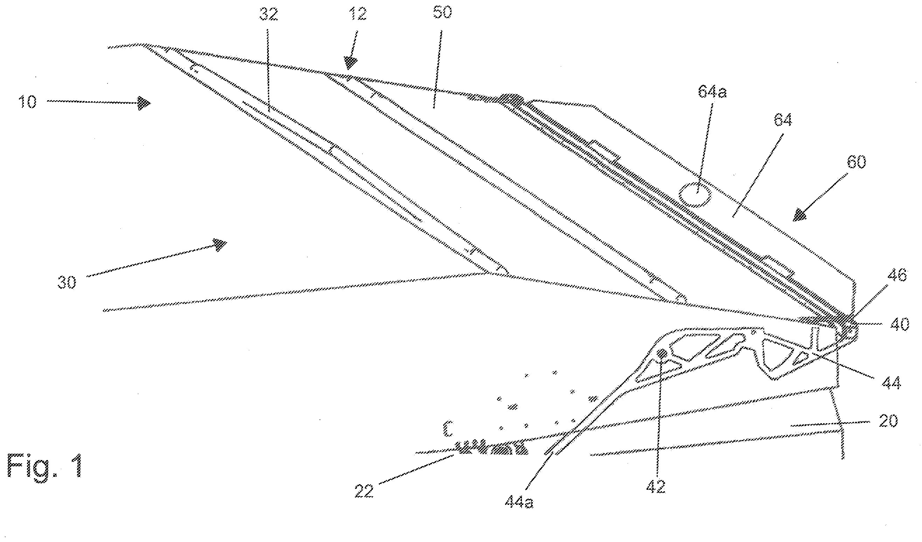

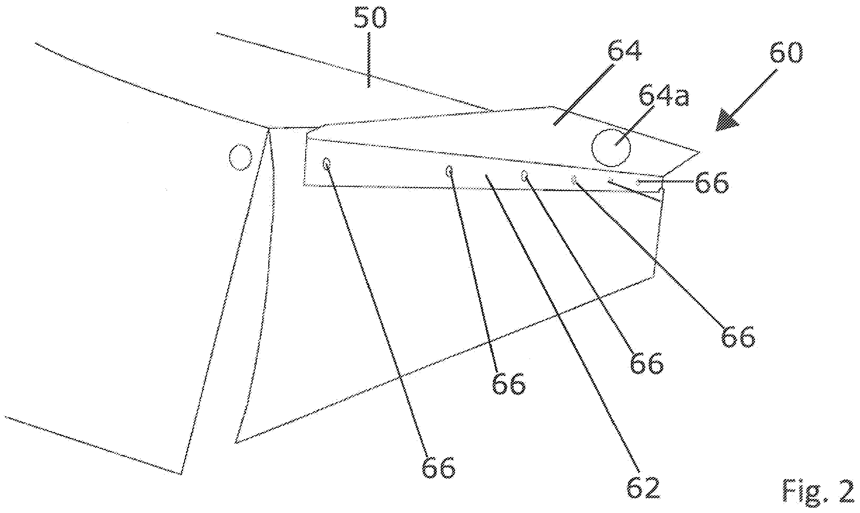

Der in Fig. 1 und Fig. 2 dargestellte Planenaufbau 10 überbaut einen vorliegend als Muldenkipp-Container ausgebildeten Unterbau 20 und bildet ein Schiebedach 12, das durch einseitige Betätigung geöffnet werden kann.

Die Einzelheiten des Unterbaus 20 sind nicht weiter dargestellt, jedoch weist der Unterbau an seiner in Fig. 1 rechten Seite eine Schwenktür auf, die das Abkippen von Ladegut ermöglicht.

An einer Führung 22 des Unterbaus 20 ist ein Verdeckgestell 30 verlagerbar, das eine Mehrzahl von Holmen 32 umfasst, die umgekehrt U-förmig ausgebildet sind und die endseitig nicht im Einzelnen dargestellte Schlitten aufweisen, die entlang der Führung 22 verlagerbar sind.

An das in Fahrtrichtung hinterste Paar von Schlitten, das über einen Holm 32 verbunden ist, ist in einem Gelenk 42 ein Endlaufteil 40 angeschlossen, wobei das Endlaufteil 40 beiderseits des Unterbaus 20 jeweils einen Lenker 44 aufweist, der gemeinsam mit einer heckseitigen Traverse 46 ein U-förmiges, um die Anlenkung 42 verschwenkbares Endlaufteil 40 bildet.

An den Holmen 32 und an der Traverse 46 ist jeweils eine Plane 50 angeschlossen, die das Verdeckgestell 30 abdeckt und mit dem Verdeckgestell 30 gemeinsam verfahrbar ist. Der Lenker 44 weist an seinem der Traverse 46 abgekehrten Ende einen Hebelarm 44a auf, der mit einem an dem Unterbau 20 vorgesehenen Vorsprung zusammenwirkt und eine Schwenkbewegung des Endlaufteils um die Anlenkung 42 veranlasst, wenn das Verdeck 12 zur Freigabe der oberen Öffnung des Unterbaus 20 geöffnet wird.

Die Plane 50 ist über das Endlaufteil 40 gelegt und bedeckt insbesondere auch die Traverse 46. Auf der Außenseite der Plane 50 ist ein Luftablenkteil 60 vorgesehen, das einen etwa der Höhe der Traverse 46 entsprechenden Verbindungsabschnitt 62 und einen hiervon abgewinkelt abstehenden Luftleitabschnitt 64 umfasst, die vorliegend aus Edelstahl ausgebildet sind. Es ist aber möglich, stattdessen das Luftablenkteil aus Kunststoffmaterial oder Aluminium auszubilden.

Der Verbindungsabschnitt 62 ist über Vernietungen 66 mit der Traverse 46 des Endlaufteils 40 dergestalt verbunden, dass die Plane 50 zwischen diesen beiden Teilen 62, 46 gehalten ist. Hierdurch ist sichergestellt, dass die Plane 50 mit dem Verdeckgestell 30 und insbesondere mit dem Endlaufteil 40 und hier wiederum mit der Traverse 46 zuverlässig verbunden ist.

Der Luftleitabschnitt 64 weist eine in etwa trapezförmige Kontur auf, die abgerundete Kanten ausweist, um ein Einschneiden der Plane 50 beim Zusammenlegen des Verdeckgestells 30, wenn dieses geöffnet wird, zu vermeiden. Der Luftleitabschnitt 64 steht vertikal etwas über der Plane 50 vor, sodass ein Staudruck des Fahrtwindes eine Kraftkomponente in vertikal nach unten gerichteter Richtung auf das Endlaufteil 40 um die Anlenkung 42 bewirkt. In dem Luftleitabschnitt 64 sind ein oder mehrere Luftdurchbrechungen 64a vorgesehen, die zugleich auch das Logo des Herstellers ausbilden können. Hierdurch wird der Luftwiderstand des Luftleitabschnitts vorteilhaft reduziert.

Es ist möglich, den Luftleitabschnitt 64 als komplanare Verlängerung des Verbindungsabschnitts 62 auszubilden, da der Verbindungsabschnitt 62 in etwa vertikal ausgerichtet ist. Aus ästhetischen Gründen und wegen des besseren dynamischen Verhaltens bei unterschiedlichen Geschwindigkeiten ist der Luftleitabschnitt gegenüber dem Verbindungsabschnitt jedoch um einen Winkel von ungefähr 135° abgewinkelt.

Es ist möglich, mehrere Luftleitabschnitte an dem Luftablenkteil 60 vorzusehen, die voneinander beabstandet sind und hierdurch Aussparungen in dem Luftleitabschnitt 64 vorzusehen.

Wird nun der mit dem Planenaufbau 10 ausgestattete Unterbau 20 durch ein Fahrzeug verlagert, weist das Endlaufteil 40 in Fahrrichtung nach hinten. Der Fahrtwind, der über den Planenaufbau 10 in Richtung auf die Traverse 46 ein Stück weit herabfällt, neigt dazu, das Endlaufteil 40 nach oben zu saugen. Durch das Luftablenkteil 60 und insbesondere dessen Luftleitabschnitt 64 entsteht ein Staudruck, der eine Kraftkomponente von je nach Geschwindigkeit dem 0,6 bis 4-fachen der Geschwindigkeit in km/h als Kraft in N nach unten richtet und damit verhindert, dass das Endlaufteil 40 angehoben wird. Bei einem Faktor von 1,2 und einer Geschwindigkeit von 50 km/h resultiert also beispielsweise eine Schließkraft von 60 N. Hierdurch ist es günstigerweise möglich, auf eine Verriegelung des Endlaufteils 40 mit dem Unterbau 20 oder mit dem Verdeckgestell 30 zu verzichten. Dies ist insbesondere dann günstig, wenn das Verdeckgestell 30 mit einem motorischen Antrieb ausgestattet ist, der im Falle einer gesonderten Verriegelung von Hand bedienungsaufwändig und störungsanfällig ist.

Die Erfindung ist vorstehend anhand eines Ausführungsbeispiels erläutert worden, bei dem das Luftleitablenkteil 60 praktisch über die gesamte Breite der Traverse 46 des Endlaufteils 40 verläuft. Es versteht sich, dass das Luftablenkteil auch nur einen Teil, beispielsweise einen zentralen Bereich, der Traverse 46 ausmachen kann oder dass nur über einen Teil der Breite der Traverse 46 ein Luftleitabschnitt 64 vorgesehen ist.

Die Erfindung ist vorstehend anhand eines Ausführungsbeispiels erläutert worden, bei dem der Unterbau 20 ein Muldenkipper ist, bei dem es von besonderem Vorteil ist, wenn das Endlaufteil 40 sich von dem Unterbau 20 abhebt, wenn der Unterbau 20 um bis zu 90° nach oben verschwenkt wird. Es versteht sich, dass ein Luftablenkteil 60 auch an Endlaufteilen angeschlossen werden kann, die nicht verschwenkbare Unterbauten überbauen, wie beispielsweise an dem Schiebedach eines Lastkraftwagens, Sattelaufliegers, Anhängers oder Containers.

Die Erfindung ist vorstehend anhand von einem verfahrbaren Unterbau beschrieben worden, der insbesondere einen Verbrennungsmotor und/oder einen Fahrzeugführer vorsieht. Es versteht sich, dass der verfahrbare Unterbau auch einen Elektromotor aufweisen kann und/oder als führerloses oder autonomes Fahrzeug ausgebildet sein kann.

## Patentansprüche

1. Planenaufbau für einen verfahrbaren Unterbau (20), wie beispielsweise einen Lastkraftwagen, einen Anhänger, einen Auflieger, einen Bahnwaggon, einen Muldenkipper oder einen Container, umfassend
ein Verdeckgestell (30), an dem eine Plane (50) aus wetterbeständigem Material anschließbar ist,
wobei das Verdeckgestell (30) eine Mehrzahl von Holmen (32) aufweist, die entlang wenigstens einer Führung (22) verlagerbar sind,
wobei das Verdeckgestell (30) endseitig ein Endlaufteil (40) aufweist, das zum Öffnen des Aufbaus anhebbar und zum Schließen des Aufbaus absenkbar ist,
**dadurch gekennzeichnet,**
**dass** an einem Ende (46) des Endlaufteils (40) ein Luftablenkteil (60) angeordnet ist, durch das der Fahrtwind in eine Kraft in Schließrichtung des Endlaufteils (40) umgewandelt wird.

2. Planenaufbau nach Anspruch 1, **dadurch gekennzeichnet, dass** das Luftablenkteil (60) an der Außenseite der Plane (50) angeordnet ist.

3. Planenaufbau nach Anspruch 1 oder 2, **dadurch gekennzeichnet, dass** das Luftablenkteil (60) mit dem Endlaufteil (40) verbunden ist, und dass Verbindungsmittel (66) die Plane (50) durchsetzen.

4. Planenaufbau nach einem der Ansprüche 1 bis 3, **dadurch gekennzeichnet, dass** das Luftablenkteil (60) einen Verbindungsabschnitt (62) und einen Luftleitabschnitt (64) aufweist, und dass der Luftleitabschnitt (64) über der Plane (50) nach oben vorsteht.

5. Planenaufbau nach Anspruch 4, **dadurch gekennzeichnet, dass** der Luftleitabschnitt (64) gegenüber dem Verbindungsabschnitt (62) abgefaltet ist.

6. Planenaufbau nach Anspruch 4 oder 5, **dadurch gekennzeichnet, dass** der Luftleitabschnitt (64) zumindest eine Durchbrechung (64a) und/oder zumindest eine Aussparung aufweist.

7. Planenaufbau nach einem der Ansprüche 4 bis 6, **dadurch gekennzeichnet, dass** der Luftleitabschnitt (64) nur einen Teil einer Breite des Endlaufteils (40) ausmacht.

8. Planenaufbau nach einem der Ansprüche 1 bis 6, **dadurch gekennzeichnet, dass** das Luftablenkteil (60) nur einen Teil einer Breite des Endlaufteils (40) ausmacht.

9. Planenaufbau nach einem der vorhergehenden Ansprüche, **dadurch gekennzeichnet, dass** das Luftablenkteil (60) einen Überstand über den Aufbau aufweist, der - gemessen in der Projektion auf eine vertikale Ebene - nicht größer als 50 mm ist.

10. Planenaufbau nach einem der vorhergehenden Ansprüche, **dadurch gekennzeichnet, dass** das Endlaufteil (40) gelenkig (42) an dem Verdeckgestell (30) angeschlossen ist, und/oder dass das Endlaufteil (40) ohne Verriegelung ausgebildet ist.

11. Planenaufbau nach einem der vorhergehenden Ansprüche, **dadurch gekennzeichnet, dass** das Luftablenkteil (60) an dem distalen Ende des Endlaufteils (40) angeordnet ist.

12. Planenaufbau nach einem der vorhergehenden Ansprüche, **dadurch gekennzeichnet, dass** mehrere Luftablenkteile (60) an dem Endlaufteil (40) vorgesehen sind.

13. Planenaufbau nach einem der vorhergehenden Ansprüche, **dadurch gekennzeichnet, dass** eine vertikale Komponente des Luftablenkteils (60) einem Fahrtwind entgegensteht und damit einen Anpressdruck bzw. eine Anpresskraft des Endlaufteils (40) nach unten erreicht.

14. Planenaufbau nach einem der vorhergehenden Ansprüche, **dadurch gekennzeichnet, dass** der Planenaufbau (10) ein Schiebedach ausbildet.

15. Verfahrbarer Unterbau (20), wie beispielsweise ein Lastkraftwagen, ein Anhänger, ein Auflieger, ein Bahnwaggon, ein Muldenkipper oder ein Container,
**gekennzeichnet durch** einen Planenaufbau (10) nach einem der vorhergehenden Ansprüche.

## Claims

1. Tarpaulin superstructure for a movable substructure (20), such as a truck, a trailer, a semitrailer, a railway wagon, a dump truck or a container, comprising
a top frame (30) to which a tarpaulin (50) made of weather-resistant material can be attached,
wherein the top frame (30) comprises a plurality of struts (32) which can be moved along at least one guide (22),
wherein the end of the top frame (30) comprises an end runner (40) which can be raised to open the superstructure and lowered to close the superstructure,
**characterized in**
**that** an air deflection part (60) is arranged at an end (46) of the end runner (40), by means of which air deflection part the airstream is converted into a force in the closing direction of the end runner (40).

2. Tarpaulin superstructure as claimed in claim 1, **characterized in that** the air deflection part (60) is arranged on the outside of the tarpaulin (50).

3. Tarpaulin superstructure as claimed in claim 1 or 2, **characterized in that** the air deflection part (60) is connected to the end runner (40), and that connecting means (66) penetrate the tarpaulin (50).

4. Tarpaulin superstructure as claimed in any of claims 1 to 3, **characterized in that** the air deflection part (60) comprises a connecting portion (62) and an air guiding portion (64), and that the air guiding portion (64) protrudes upward over the tarpaulin (50).

5. Tarpaulin superstructure as claimed in claim 4, **characterized in that** the air guiding portion (64) is folded away with respect to the connecting portion (62).

6. Tarpaulin superstructure as claimed in claim 4 or 5, **characterized in that** the air guiding portion (64) comprises at least one opening (64a) and/or at least one recess.

7. Tarpaulin superstructure as claimed in any of claims 4 to 6, **characterized in that** the air guiding portion (64) makes up only part of a width of the end runner (40).

8. Tarpaulin superstructure as claimed in any of claims 1 to 6, **characterized in that** the air deflection part (60) makes up only part of a width of the end runner (40).

9. Tarpaulin superstructure as claimed in any of the preceding claims, **characterized in that** the air deflection part (60) comprises a supernatant over the superstructure which, measured in the projection onto a vertical plane, is not exceeding 50 mm.

10. Tarpaulin superstructure as claimed in any of the preceding claims, **characterized in that** the end runner (40) is articulated (42) on the top frame (30), and/or that the end runner (40) is designed without locking.

11. Tarpaulin superstructure as claimed in any of the preceding claims, **characterized in that** the air deflection part (60) is arranged at the distal end of the end runner (40).

12. Tarpaulin superstructure as claimed in any of the preceding claims, **characterized in that** a plurality of air deflection parts (60) are provided on the end runner (40).

13. Tarpaulin superstructure as claimed in any of the preceding claims, **characterized in that** a vertical component of the air deflection part (60) opposes an airstream and thus achieves a downward contact pressure or contact force on the end runner (40).

14. Tarpaulin superstructure as claimed in any of the preceding claims, **characterized in that** the tarpaulin superstructure (10) forms a sliding roof.

15. Movable substructure (20), such as a truck, a trailer, a semitrailer, a railway wagon, a dump truck or a container,
**characterized by** a tarpaulin superstructure (10) as claimed in any of the preceding claims.

## Revendications

1. Structure de bâchage pour une infrastructure mobile (20), telle qu'un camion, une remorque, une semi-remorque, un wagon ferroviaire, un camion à benne basculante ou un conteneur, ladite structure de bâchage com prenant
un bâti de capote (30) auquel peut être raccordée une bâche (50) en matériau résistant aux intempéries,
le bâti de capote (30) présentant une pluralité de longerons (32) qui peuvent être déplacés le long d'au moins un guide (22),
le bâti de capote (30) présentant à son extrémité une pièce de fonctionnement d'extrémité (40) qui peut être soulevée pour ouvrir la structure et abaissée pour fermer la structure,
**caractérisé en ce**
**qu'**à une extrémité (46) de la pièce de fonctionnement d'extrémité (40) est disposée une pièce de déflexion d'air (60), par laquelle le vent de déplacement est transformé en une force dans le sens de la fermeture de la pièce de fonctionnement d'extrémité (40).

2. Structure de bâchage selon la revendication 1, **caractérisée en ce que** la pièce de déflexion d'air (60) est disposé sur le côté extérieur de la bâche (50).

3. Structure de bâchage selon la revendication 1 ou 2, **caractérisée en ce que** la pièce de déflexion d'air (60) est reliée à la pièce de fonctionnement d'extrémité (40), et **en ce que** des moyens de liaison (66) traversent la bâche (50).

4. Structure de bâchage selon l'une quelconque des revendications 1 à 3, **caractérisée en ce que** la pièce de déflexion d'air (60) comprend une section de liaison (62) et une section de guidage d'air (64), et **en ce que** la section de guidage d'air (64) fait saillie vers le haut au-dessus de la bâche (50).

5. Structure de bâchage selon la revendication 4, **caractérisée en ce que** la section de guidage d'air (64) est repliée par rapport à la section de liaison (62).

6. Structure de bâchage selon la revendication 4 ou 5, **caractérisée en ce que** la section de guidage d'air (64) présente au moins une ouverture (64a) et/ou au moins un évidement.

7. Structure de bâchage selon l'une quelconque des revendications 4 à 6, **caractérisée en ce que** la section de guidage d'air (64) ne représente qu'une partie d'une largeur de la pièce de fonctionnement d'extrémité (40).

8. Structure de bâchage selon l'une quelconque des revendications 1 à 6, **caractérisée en ce que** la pièce de déflexion d'air (60) ne représente qu'une partie de la largeur de la pièce de fonctionnement d'extrémité (40).

9. Structure de bâchage selon l'une quelconque des revendications précédentes, **caractérisée en ce que** la pièce de déflexion d'air (60) présente une saillie par rapport à la structure qui, mesurée en projection sur un plan vertical, n'est pas supérieure à 50 mm.

10. Structure de bâchage selon l'une quelconque des revendications précédentes, **caractérisée en ce que** la pièce de fonctionnement d'extrémité (40) est articulée (42) sur le bâti de capote (30), et/ou **en ce que** la pièce de fonctionnement d'extrémité (40) est dépourvue de verrouillage.

11. Structure de bâchage selon l'une quelconque des revendications précédentes, **caractérisée en ce que** la pièce de déflexion d'air (60) est disposée à l'extrémité distale de la pièce de fonctionnement d'extrémité (40).

12. Structure de bâchage selon l'une quelconque des revendications précédentes, **caractérisée en ce que** plusieurs pièces de déflexion d'air (60) sont prévus sur la pièce de fonctionnement d'extrémité (40).

13. Structure de bâchage selon l'une quelconque des revendications précédentes, **caractérisée en ce qu'**une composante verticale de la pièce de déflexion d'air (60) s'oppose à un vent de déplacement et permet ainsi d'obtenir une pression et/ou une force d'appui vers le bas de la pièce de fonctionnement d'extrémité (40).

14. Structure de bâchage selon l'une quelconque des revendications précédentes, **caractérisée en ce que** la structure de bâche (10) forme un toit ouvrant.

15. Infrastructure mobile (20), telle qu'un camion, une remorque, une semi-remorque, un wagon ferroviaire, un camion à benne basculante ou un conteneur,
**caractérisée par** une structure de bâchage (10) selon l'une quelconque des revendications précédentes.
